# EUROPEAN PATENT APPLICATION

(11) **EP 3 104 007 A1**
(43) Date of publication of application: **14.12.2016**
(21) Application number: 15170049.9
(22) Date of filing: 01.06.2015
(51) Int. Cl.: F04B 53/00, F04B 53/14, F16J 10/02

(54) **PISTON-CHAMBER COMBINATION**

(71) Applicant: NVB Propulsion International Ltd, Berkshire RG1 3EU (GB)
(72) Inventor: van der Blom, Nicolaas, Reading, Berkshire RG1 3EU (GB)

(57) **Abstract**

A piston-chamber combination comprising a chamber (1) which is bounded by an inner chamber wall (4), and comprising a piston (1) in said chamber (2) to be engagingly movable relative to said chamber wall (4) at least between a first position and a second position of the chamber (2), said chamber (2) having cross-sections of different cross-sectional areas and differing circumferential lengths at the first and second longitudinal positions, and at least substantially continuously different cross-sectional areas and circumferential lengths at intermediate longitudinal positions between the first and second longitudinal positions, the cross-sectional area and circumferential length at said second longitudinal position being smaller than the cross-sectional area and circumferential length at said first longitudinal position, said piston (1) is comprising an member (12) for suspension of the sealing (8,9), said member (12) is rotatable, and said sealing (8,9) is comprising a separate part (6,6') engaging the wall (4) of said chamber (2) and a sealing (8,9) made of elastically deformable impervious material, and mounted on the piston rod (5).

This is achieved by the piston (1) is produced to have a production-size of said separate part (6') and said sealing (8,9) in the stress-free and undeformed state thereof in which the circumferential length of the piston (1) is approximately equivalent to the circumferential length of said chamber wall (4) at said second longitudinal position, the piston (1) being expandable from its production size in a direction transversally with respect to the longitudinal / circular direction of the chamber (2) thereby providing for an expansion of sealing (7) of the piston (1) from the production size thereof during the relative movements of the piston from said second longitudinal position to said first longitudinal / circular position, one end, closest to a second longitudinal / circular position of the chamber, the sealing (7,7') is embedded in a separate part (6,6'), said sealing (8,9) of the piston (1) is comprising sealing sections (19,20; 51,51') in a direction along the piston rod (5), said sealing (7) is updivided updivided in said sections over the circumference of said sealing (7), and, the angle (δ;ξ) in-between two adjacent sealing sections is much less than 180°, one other end, closest to a first longitudinal / circular position of the chamber, said sealing (7) is updivided updivided in said sections over the circumference of said sealing (7), and, the angle (ε;ψ) in-between two adjacent sealing sections is bigger than said angle (δ;ξ).

## Description

### TECHNICAL FIELD

A piston-chamber combination comprising a chamber which is bounded by an inner chamber wall, and comprising a piston in said chamber to be engagingly movable relative to said chamber wall at least between a first position and a second position of the chamber, said chamber having cross-sections of different cross-sectional areas and differing circumferential lengths at the first and second longitudinal positions, and at least substantially continuously different cross-sectional areas and circumferential lengths at intermediate longitudinal positions between the first and second longitudinal positions, the cross-sectional area and circumferential length at said second longitudinal position being smaller than the cross-sectional area and circumferential length at said first longitudinal position, said piston is comprising an member for suspension of the sealing, said member is rotatable, and said sealing is comprising a separate part engaging the wall of said chamber and a sealing made of elastically deformable impervious material, and mounted on the piston rod.

### BACKGROUND OF THE INVENTION

This invention deals with solutions for pistons in general, and specifically concerning reliability and life time.
In order to optimize the reduction in working force of a piston pump, the difference in cross-sectional area's at a first longitudinal / circular position and that of a second longitudinal / circular position should be as big as possible. This demand is contrary the life time and reliability demand of the elastically deformable material of a piston, of which at least a (separate) part is sealingly engaging the wall of said chamber (WO2000/000227, WO2013/026508). Specifically e.g. of a fast moving piston will the 3-dimensional change in size of the material of the sealing become a limit for the speed of the piston, for the energy used and for the life time.
WO2000/000227 shows longitudinal chambers with a constant circumference where the change of the dimensions of the material of a piston within said chambers is solely 2-dimensional, as the sealing of said last mentioned pistons is only bending, so that the maximum speed of said pistons may be higher than those where a 3-dimensional change of the dimensions of the sealing is necessary.
However, chambers with a constant circumference may not be easy to produce, and may therefore be expensive.

### OBJECT OF THE INVENTION

The object is to provide an optimalisation of the functionning of any kind of a combination of a piston and a chamber, and in particular as a pump.

### SUMMARY OF THE INVENTION

In the first aspect, the invention relates to a combination of a piston and a chamber, wherein: one end, closest to a second longitudinal / circular position of the chamber, the sealing of said piston is embedded in a separate part, said separate part is sealingly engaging the wall of said chamber, at least from a first- to a second longitudinal / circular position of the chamber, wherein said sealing of the piston is build up by (e.g. plane) sections of which, at least at a second longitudinal / circular position, the in-between angles are less than 180°. The basis of this new construction design of the piston is that of Figs. 5A-5H of WO2000/ 000227, and regarding said separate part it is Figs. 80A-J and Figs. 81A-D of WO2013/026508.
The separate part is comprising a sealing means e.g. an O-ring which has a bigger cross-sectional area in a cross-section through the centre axis of said chamber, which may be elongate or circular, at a second longitudinal / circular position of said chamber, than its cross-section at a first longitudinal / circular position. Said O-ring is preferably attached to at least one of the members with reference number 43 (WO2000/000227), so that it can than expand its circumferencial length from said attachment point of at least one member 43, whereby its cross-sectional area in a plane through the centre axis of the piston, will become smaller, when extended, when said piston is moving from a second to a first longitudinal / circular position of the chamber. When said sealing of the piston is embedded in said O-ring, in such a way, that the sealing can change shape by solely bending the elastically deformable material of said sealing, instead of a 3-dimensional change of its size by stretching said material, when said piston is moving from a second to a first longitudinal / circular position, the life time of said sealing can be extended very much, while the change of the size of the sealing of the piston according to smilar changes of the size of the wall of the chamber can be performed much quicker and with less energy used. At a second longitudinal / circular position of the chamber may the sealing sections of said sealing be preferably formed as folded planes, when unpressurized, like that of a shade. Another preferred form of the sealing section is that of a curve. When said piston is moving to a first longitudinal / circular position, the common line, the fold, in-between two adjacent sections of the shade formed sealing of the piston will become farther away from each other, because the circumference of the material of the O-ring is being extended. Thus, the in-between angles of plane sections, having a common folding line closest to the sealing of said piston, which may be less than 180° or 90° or 45° at said second longitudinal / circular position of the chamber, are becoming bigger. Said angles, when the piston has arrived at a first longitudinal / circular position, may preferably to become less than 180°, in order to enabling backwards folding of the plane sections of said piston sealing, when the piston is moving towards a second longitudinal position. This is also valid for a similar angle between centres of curves of a curved sealing. Other section forms than plane or curved may also be possible.

In a second aspect the invention relates to a combination of a piston and a chamber wherein the sealing is shaped like that of a shade.
Thus the sealing of the piston may comprise several adjacent wall sections, continuously positioned along the curcumference of said sealing, which may preferably be plane, which have an in-between angle less than 180° in a cross-section of the shade formed sealing sections of said piston, in a plane which is perpendicular the fold of two said adjacent wall sections. The above mentioned in this sub-chapter is also valid for curved sections.

In a third aspect the invention relates to a combination of a piston and a chamber, wherein the reinforcement of said sealing is positioned at least in a fold of said shade.
A non-stressed sealing of the piston makes it vulnerable for forces working approx. perpendicular on its surface. Which is why it is necessary to reinforce it. The reinforcement may comprise of several closely lying reinforcement strings from the turning point of said sealing approx. parallel to a common folding line in-between adjacent sections of said sealing, and ending in said O-ring. At least should said common folding line comprising such a string as reinforcement. It is also preferable to have additional reinforcements, positioned in a certain angle (e.g. 90°) to said reinforcement strings. This may also be valid for curved sealings.

In a fourth aspect the invention relates to a combination of a piston and a chamber, wherein the sealing of said piston in a longitudinal / circular cross-section of said chamber is having an at least approx. 60° with the central axis of said chamber.
As an additional solution for the problem of minimilization of the stresses of the elastically deformable sealing material of the sealing of the piston, may the length of said sealing of the piston projected to a plane through the central axis, be bigger than the radius of the chamber.
A preferred angle between the sealing of said piston and the central axis of the chamber may be approx. 60°. A bigger angle may be an option, but this will reduce the stroke length, and thus the stroke volume, and thus the pumping speed.
In another way, in order to avoid stressing the elastically deformable material of the sealing the turning point of the member may be nearby the end of the vulcanisation stroke of said sealing on the piston rod, which is the turning point of the shade formed sealing. This may be done virtually as well, due to the fact that the turning point of said member is difficult to merge with the end of a vulcanisation stroke. When combined with e.g. the shade formed sealing of the piston may the life time of the piston be optimized.

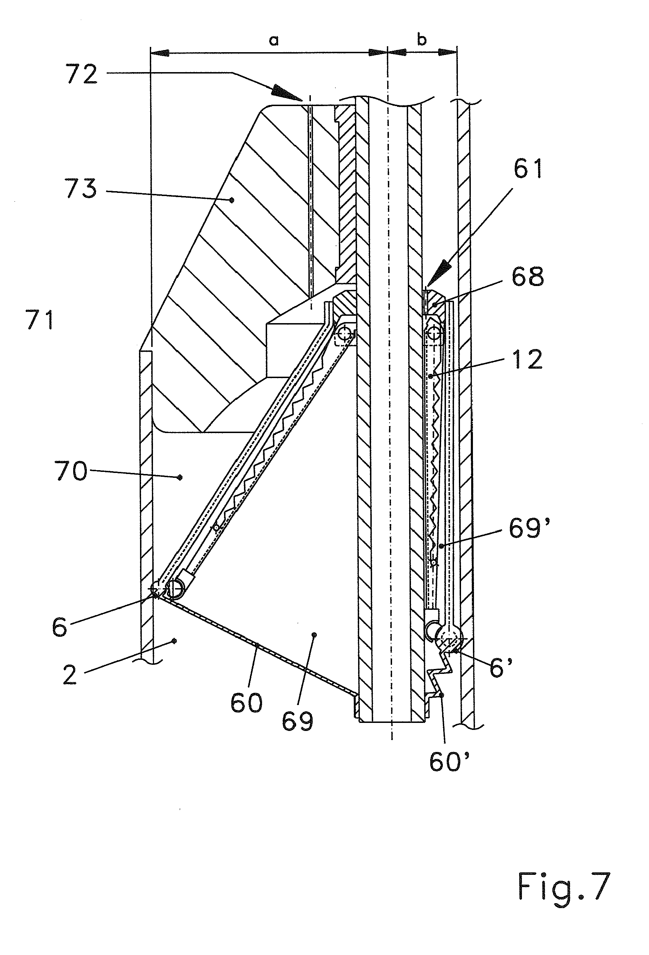

In a fifh aspect the invention relates to a combination of a piston and a chamber, wherein each section of the shade formed sealing of the piston is comprising a reinforcement, said reinforcement is lying outside a common folding line in-between adjacent sections of said shade shaped sealing. Because the sections are not changing size in a direction in relation to the centre axis of the chamber, said sections may comprise a reinforcement which may prevent the section to bend of even deform in 3-dimensions under pressure.
For a good fuctionning of the piston is it necessary that the O-ring is following the shape (in case of constant circumference type chamber) and/or the size of the chamber wall (in case of a chamber with a preferred circular transitional cross-sectional section), when the piston is moving from a 2^{nd} to a 1^{st} position of said chamber. In a pump where only the pumping stroke is from 1^{st} to 2^{nd} chamber postions, during a stroke from 2^{nd} to 1^{st} positions the O-ring may preferably be engagingly-, but not be sealingly communicating with the wall of said chamber - in order to lower friction forces. The shown coil spring is providing this support, and said spring may be fastened to one or more members. During the pumping stroke will there be overpressure under the piston seal, which willpush the sealing outwards towards the O-ring, the last mentioned being pushed to the wall of the chamber, now communicating sealingly with the wall of said chamber.
For a continuously good functionning of the piston is an correctly folding back of said shade sealing nessary, when the piston is performing a pumping stroke (1^{st} → 2^{nd} position of the chamber). The folding back will go inwards, while under internal (over)pressure. Said overpressure may prohitbit an intended folding back - however, this will not influence the piston function as such, when the sealing sections and the folds are not begin to communicate with the wall of said chamber, which would give friction and lower life time of said sealing. In order to support an intended folding back, the folds but also the sections of the sealing may comprise reinforcement strings. Firstly when the pressurized medium has exited the chamber, reducing the overpressure inside the piston, an 'blown up' sealing will fold back to its production size. A solution for obtaining a correct folding back during the pumping stroke, may be that there is a seal embedded in the O-ring,which is existing in a transitional cross-section of the piston. Here may also be folds existing like a shade, according to the shape of a seal in a foam piston of Fig. 7B of WO2000/065235, in order to prevent 3D- stretching, enhancing its life time. The piston may than have a venting hole from the internal space within the sealings and the piston rod to the atmosphere, so that the piston internally can 'breath', avoiding undesired overpressure. The size of said venting hole may be tuned in such a way that there is a little overpressure, so that the O-ring during the pumping stroke is sealingly communicating with the wall of the chamber. The above mentioned in this sub-chapter may also be valid for curved sealing sections.
The chamber, which very well can be combined with these preferred embodiments of the piston, is of a classic type with continuous circular transitional cross-sections, thus less expensive than those for pistons having a constant circumference of the contact area of the sealing with the chamber.

In a sixth aspect the invention relates to a combination of a piston and a chamber, wherein the member may have a chamgeble length, by menas of a portion whichis retractable, e.g. at a second longitudinal / circular position of the chamber, due to a non-merge of turning points for the sealing and the member.
The purpose of a piston-chamber combination defines when a piston needs to be sealingly communicating with the wall of the chamber. In a pump, preferably this should happen when the piston is moving from a first to a second longitudinal / circular position of the chamber. In an actuator this should preferably happen when the piston is moving from a second to a first longitudinal / circular position of the chamber. When the actuator is comprising two pistons, the movement can also be from a first to a second longitudinal / circular position of the chamber. In a shock absorber it may preferably be to have the piston sealingly communicating with the wall of the chamber when the oil inside needs to be compressed - this may be preferably both from a second to a first longitudinal / circular position of the chamber and from a first to a second longitudinal / circular position of the chamber, optionally from a first to a second longitudinal / circular position of the chamber.

### BRIEF DESCRIPTION OF THE DRAWINGS

In the following, preferred embodiments of the invention will be described with reference to the drawings wherein:

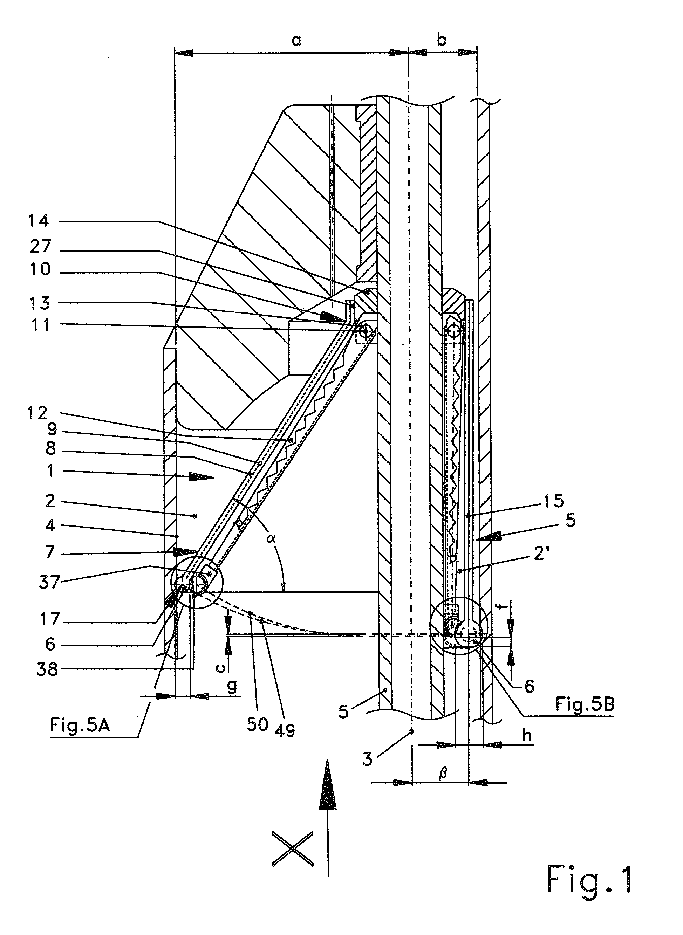

- Fig. 1: shows left of the central axis a longitudinal cross-section of a piston at a first longitudinal position of an elongate chamber - at the right side of said axis, the same, but now at a second longitudinal / circular position of the chamber.

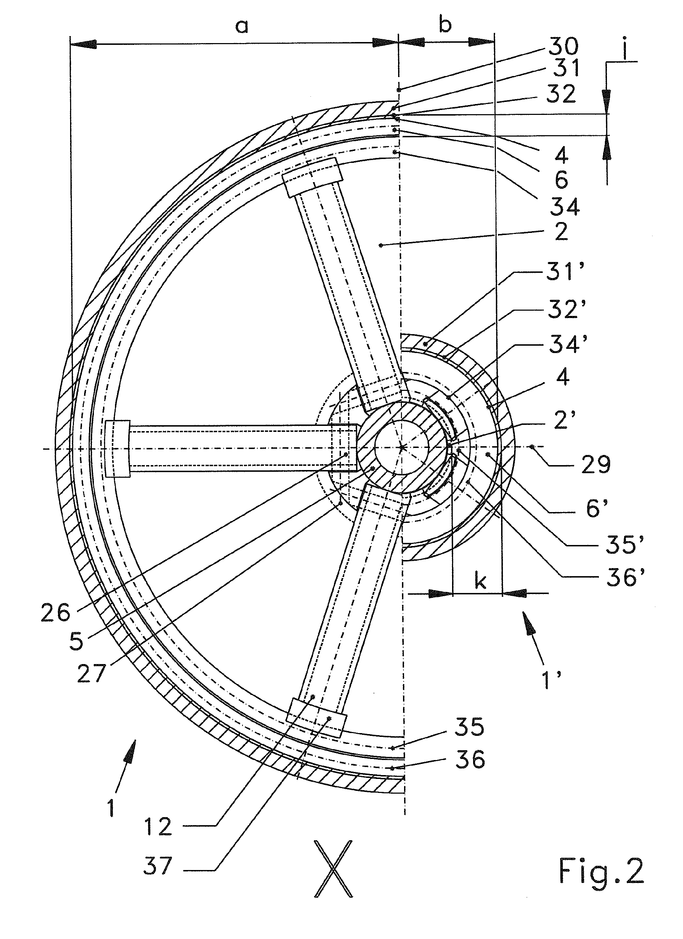

- Fig. 2: shows the suspension of the members at the piston rod for the support of the O-ring - top view at the left of the central axis and bottom view at the right thereof.

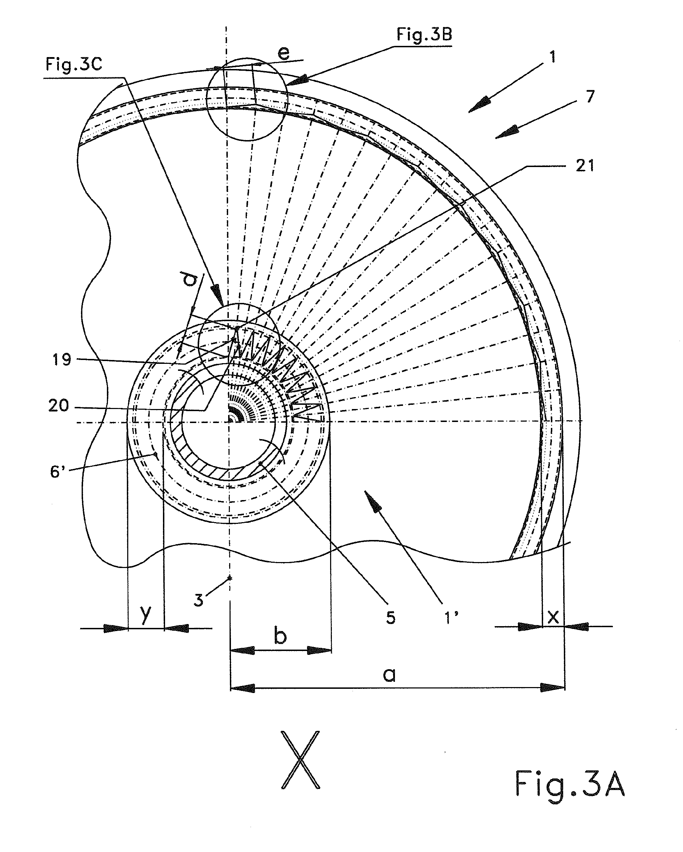

- Fig. 3A: shows a scaled up view X of Fig. 1, of the difference in the folding of the sealing of the piston at first and second longitudinal / circular positions of the chamber.

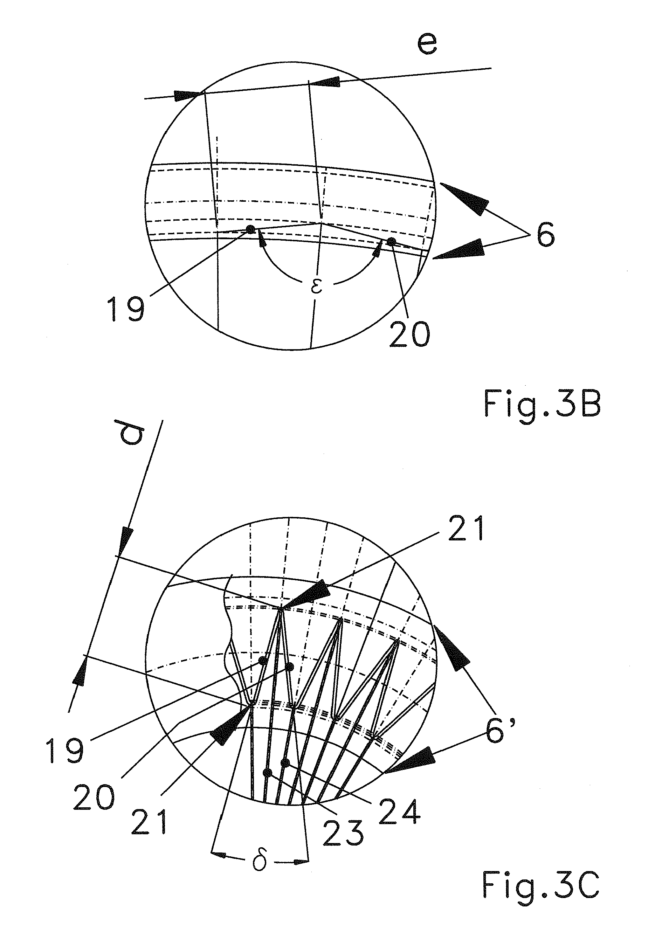

- Fig. 3B: shows an enlargement of the folding of the sealing of said piston shown in Fig. 3A at a first longitudinal / circular position of the chamber.
- Fig. 3C: shows an enlargement of the folding of the sealing of said piston at a second longitudinal / circular position of the chamber, shown in Fig. 3A.

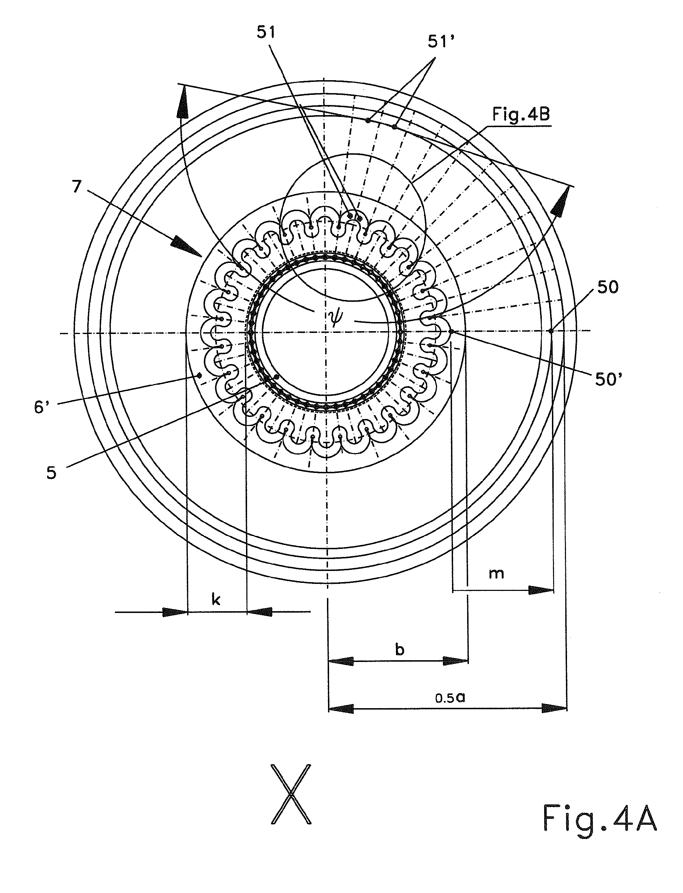

- Fig. 4A: shows a scaled up view X of Fig. 1, of the difference in the enrolling of the sealing of the piston at first and second longitudinal / circular positions of the chamber.

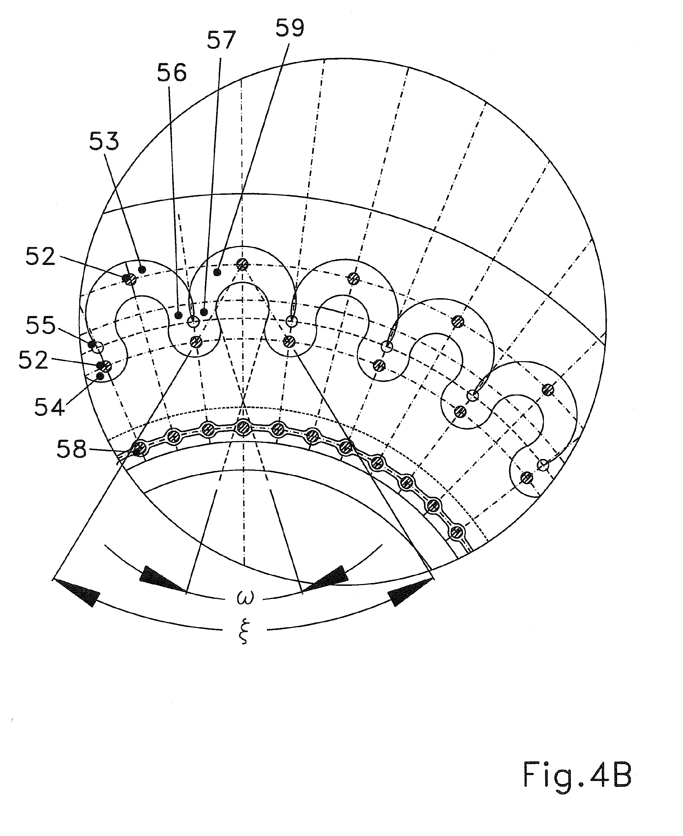

- Fig. 4B: shows an enlargement of the production size and shape of the sealing of said piston shown in Fig. 4A at a second longitudinal / circular position of the chamber.

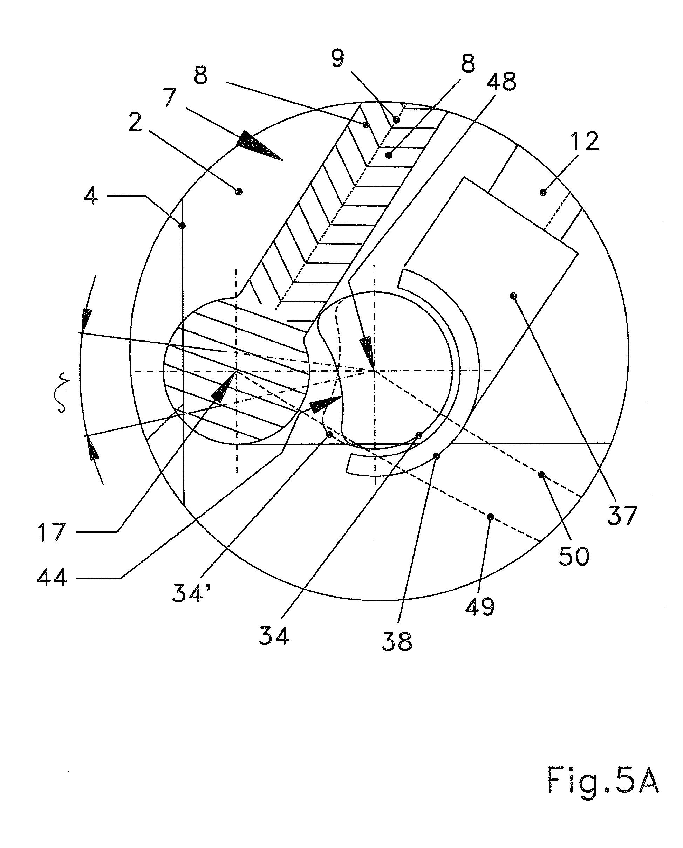

- Fig. 5A: shows a detail of Fig. 1 of the sealing and assembly of the O-ring, when the piston is at a 1^{st} longitudinal / circular position of the chamber.

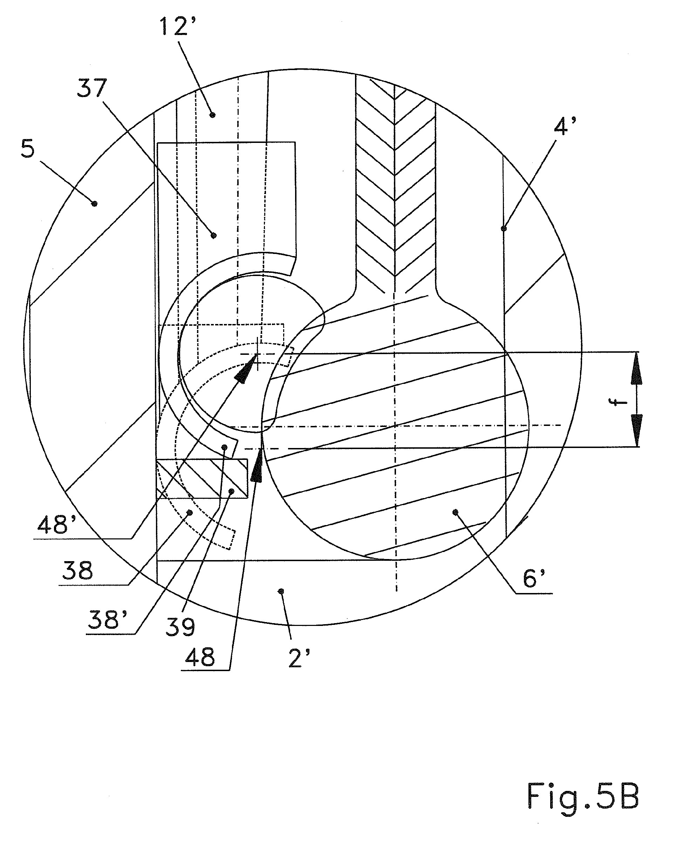

- Fig. 5B: shows a detail of Fig. 1 of the sealing and assembly of the O-ring, when the piston is at a 2^{nd} longitudinal / circular position of the chamber.

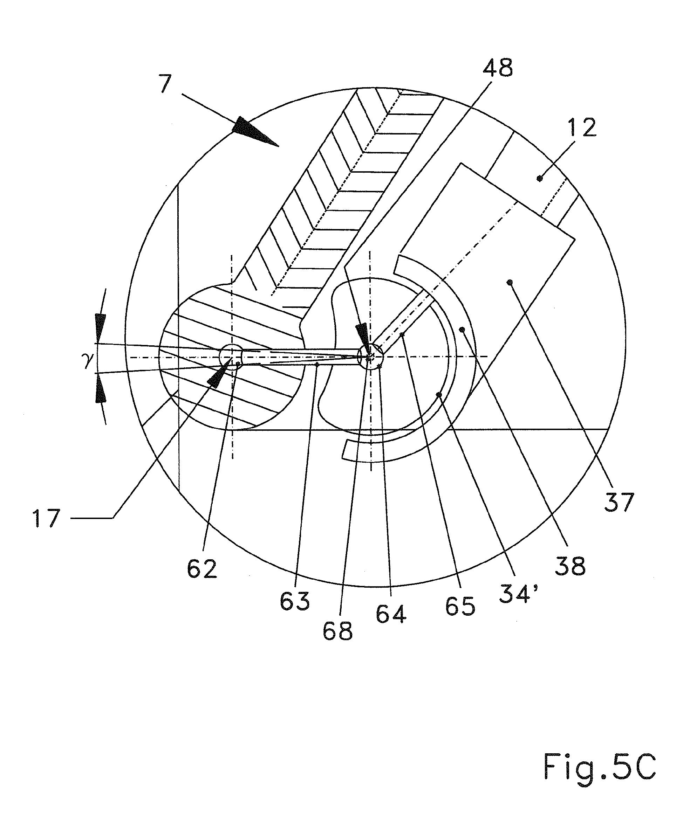

- Fig. 5C: shows the suspension of the O-ring by a member.

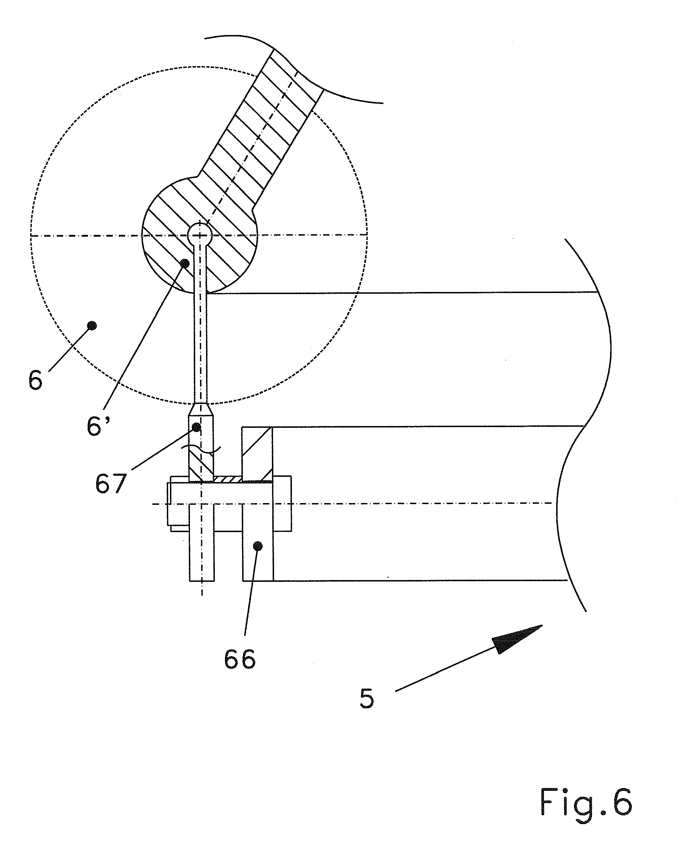

- Fig. 6: Shows an alternative suspension of the O-ring by a flat spring.
- Fig. 7: shows the piston of Fig. 1, now further comprising a sealing surface embedded in the O-ring and vulcanized to the piston rod.

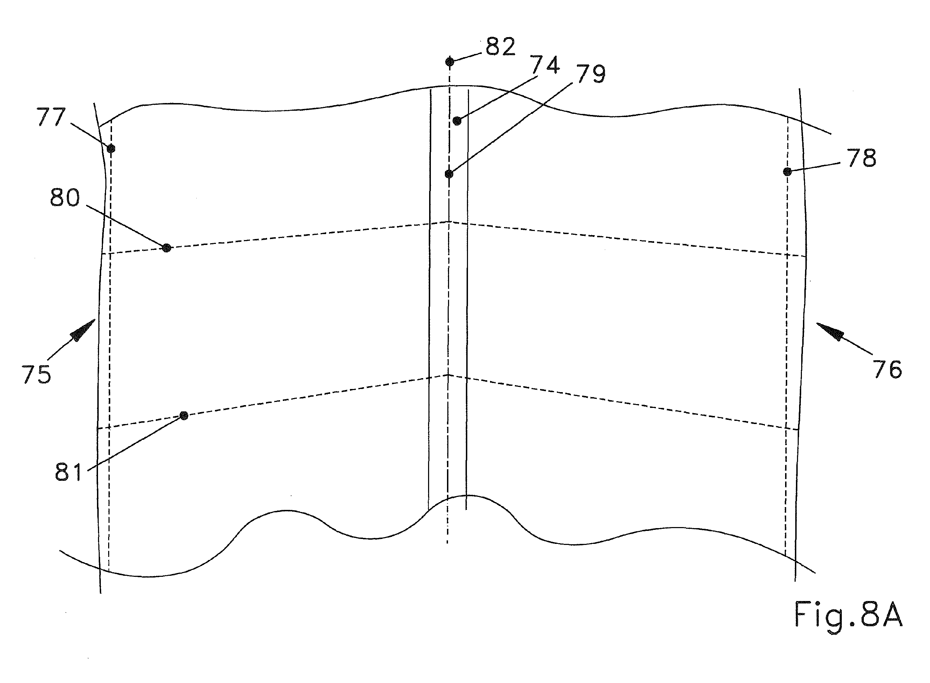

- Fig. 8A: shows a part of a plane - type sealing surface with a fold, and reinforcement strings.

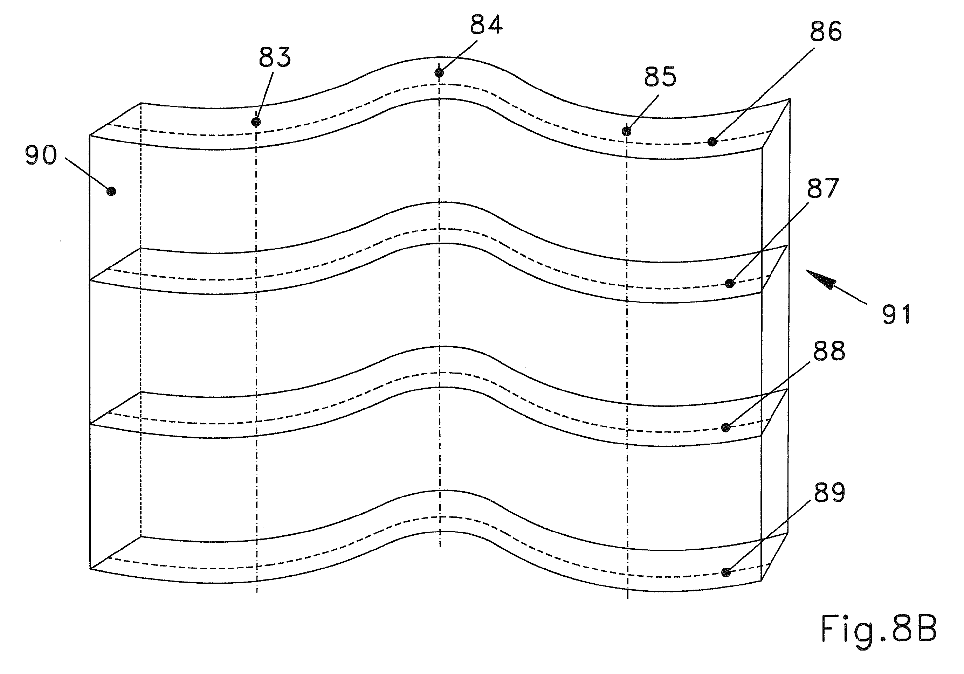

- Fig. 8B: shows a part of a curve - type sealing surface with reinforcement strings.

### DESCRIPTION OF PREFERRED EMBODIMENTS

Fig. 1 shows two longitudinal cross-sections of a piston 1, 1' in an elongate chamber 2. The centre axis 3 of said chamber 2, 2'. The internal wall 4 of the chamber 2. The piston rod 5. The O-ring 6 (at a first longitunal position) and 6' (at a second longitudinal position). In said O-ring 6, 6' is a sealing 7 embedded, comprising an impervious layer 8 and a reinforcement layer 9. Said O-ring is vulcanized to the piston rod 5 at spot 10. Other forms of mounting the piston on the piston rod 5 are possible, e.g. on a cylinder formed end which has within an O-ring (as shown in WO2000/070227), wherein said cab is mounted within a pair of closing rings, which have been mounted on the piston rod. Very nearby said spot 10 is the centre 11 of the turning point 11 of the arm 12, which supports said O-ring. Said turning point is comprising an axel 13 and a suspension 14 of the arm 12. Said suspension 14 is sealingly moiunted on the piston rod 5.
The cross-section of the piston 6 and the chamber 2 is shown left of the centre axis 3. The radius of said chamber 2 is at said first longitudinal position 'a'. The angle α is the angle between the line 15 straight between centers of the turning points 11 and the center 17 of the O-ring 6 of the member 12 and a horizontal line 16 which is perpendicular the centre axis 3. The diameter x of said O-ring 6 has been reduced substantially in relation to the diameter y of said O-ring 6' at a second longitudinal position. The circle segment `t' shows the movement of the centre 17 of said O-ring when said piston is moving between first and second longitudinal positions. The circle segment `s' shows the rotation of arm 12, turning around said axle 13 through the centre 17 of said O-ring when said piston 1 is moving between first and second longitudinal positions. The circle segment 't' shows the rotation around the middle of the sealing just under the bottom of the vulcanisation on said piston rod 5 of the centre 17 of said O-ring when said piston 1 is moving between first and second longitudinal positions. The difference 'c' at a second longitudinal position shows that the sealing is stretched a length 'c' in comparison with the sealing length at a first longitudinal position. Said diffrence 'c' needs to be as small as possible, in order to avoid stressing the sealing, thereby enhancing life time. The traject curves 49 and 50 of the centres 17 and 48, of the coil spring 34 and the O-ring 6,6', respectively when the piston is moving from a first- to a second longitudinal / circular position of the chamber.
The cross-section at a second longitudinal position is showing right of the centre axis 3 the piston 1' at a second longitudinal position of said chamber 2'. The radius of said chamber 2' is at said second longitudinal position 'b'. The angle β is the angle between the line 15 and the centre axis 3 of the piston 1'. 'g' is the diameter of the O-ring 6 at the first longitudinal / circular position, which is smaller than 'h', which is the diameter of the O-ring 6' at a second longitudinal / circular position. Both diameters are measured in a cross-section in a plane through the centre axis 3 of the chamber 2, 2'.
View X is shown in Figs. 2, 3A and 4A.
The coil spring 34 (see also WO2000/000227) which is pressing the O-ring 6, 6' onto the internal wall 4 of the chamber 2, is shaped such, that O-ring 6, 6' is supported in pressing itself onto said internal wall, thereby enabling a proper sealing. Said spring is suspended by an holder 38 at the end of the member 12. At a 1^{st} position of the chamber is said member positioned at the very end of said arm 12. At a 2^{nd} position of the chamber 2' has said coil spring 34 be turned, in relation to its position at said 1^{st} position of te chamber, in a plane through said centre axis 3. Said holder 38 is shaped in such a way that it allows a torsional turn of said coil spring 34. At said 2^{nd} position of the chamber 2' is said holder 34' positioned farthest from the end of said member 12. The change of the position of the holder 38,38' is done by a stop 39. This enables the sealing to be unstressed at said position, and this enlarges life time. See Fig. 5B for the holder 38,38' in its end position and its retracted position, farthest from the end of the memebr 12. The diameter of said O-ring is 'h'. In this drawing is only one member shown - no other members are are shown.

Fig. 2 shows the combination as view X of Fig. 1. Not shown is the sealing 7 of said piston 1,1'. Shown is said combination at a 1^{st} longitudinal / circular position of the chamber with a chamber radius 'a', and at a 2^{nd} longitudinal / circular position of the chamber with a chamber radius 'b' - in between is the centre lines 29, 30 of the chamber 2, 2'. The circle 32, 32' shows the sealing of the O-ring 6, 6' against the inner chamber wall 4, 4'. The diameters `j', 'k' of the O-ring 6, 6' at a 1^{st} and 2^{nd} longitudinal / circular position of the chamber resp. radius 'a' > radius 'b'. The coil spring 34, 34' at the 1^{st} and 2^{nd} longitudinal / circular position of the chamber, resp. The centre lines 36, 36' of the O-ring 6, 6', resp. The centre lines 35, 35' of the coil spring 34, 34', resp.

Fig. 3A shows schematically the X view of Fig. 1. One quarter with details of the sealing 7 is shown. Neither arms 12 nor the suspension 14 is shown: please see Fig. 2. The O-ring 6' at a second longitudinal position has a big diameter 'y', and this thickness is being used to enabling the embeddiness of a shade folded sealing 7 by vulcanisation into said O-ring 6'. Each fold 21 is comprising two adjacent unstressed sealing section planes 19 and 20, resp. of flexible sealing material. There are totally 34 folds 21. The centre axis 3 and the piston rod 5.

Figs. 3B and 3C shows details of said fold 21 which is comprising two adjacent unstressed sealing section planes 19 and 20, resp. of flexible sealing material. The in-between angle δ, at a 2^{nd} longitudinal / circular position of the chamber is smaller than the same in-between angle ε when the piston 1 is on a first longitudinal position. The angle ε is less than 180°. The length of the unstressed flexible sealing 7 material 'e' (Fig. 3B), when the piston 1 is at a first longitudinal position, is approx. the same as length 'd' (Fig. 3C) when said piston 1 is at a second longitudinal position. The transitions 21 and 22, resp. of each adjacent par 19 and 20, resp. are rounded off. Within the sealing 7 material are reinforcements positioned, e.g. 23 and 24, preferably positioned within the transitions 21 and 22, respectively. Reinforcements may also be within the section planes 19,20 (reinforcements not shown). The production of said last mentioned reinforcements is simple, as said sealing sections are not stressed in a plane through said planes - only to maintain the flatness of said sealing seactions. The production of said reinforcements can be done by knitting.

The suspension 25 of the members 12 is having a tight fit with the piston rod 5. Five members 12 are shown. Said members 12 are communicating with an axle 26, which have a tight fit with the suspension 25. Said members can turn around said axles 26. The centre line 27 of said axle 26.

Fig. 4A shows a view X of Fig. 1, without showing members 12 - only the enrolling type of the sealing 7, both at a seond and a first longitudinal longitudinal / circular position of the chamber. This type of sealing is comprising sections 51,51', which at a second longitudinal postion of the longitudinal / circular chamber have their production size, show to have been rolled together inwards in a direction to the piston rod 5, and farthest from the piston rod 5 have the separate part's O-ring 6' as border. The angles between the reinforcements (ω) and the one between the surfaces (ξ) are shown in Fig. 4B, and are much smaller than 90°. Said sections 51 fill a complete circumference at a second chamber postion. At a first longitudinal / circular position of the chamber are said sections 51' rolled out into a continuous surface by bending the material only: the in-between angle ψ between two sections 51' is just below the 180°. It depends on the size of the diameter of the chamber at a second longitudinal / circular position of the chamber, as how long a part of said sections are in the direction to the center point in a transitional cross-section of the piston, thus how big the maximum size is of the circumference at a first chamber poisition. Also is said size depending on the maximum pressure of the pump, as said pressure works internally of the sealing in a direction opposite the folding in of said sealing: the smaller the maximum pressure of the medium is, the bigger the size of the circumference at a first longitudinal / circular position of the chamber can be, the bigger the possibility of saving energy. In relation to the size of the folding type of sealing, according Figs. 3A-B (incl.) is the current maximum size at a first longitudinal / circular position of the chamber approximately ½ of that (size 'a'). The 'b' size is the same as in Figs. 3A-B (incl.). The width 'k' of the O-ring 6'. The change of position 'm' of the outer border 50',50 of the sealing 7.

Fig. 4B shows an enlargement of the production size and shape of the sealing 7 of said piston shown in Fig. 4A at a second longitudinal / circular position of the chamber. More details are shown here, e.g. the reinforcement strengs 52, on the middle of circle segments 53 and 54. On top of the sealing 7 are said ends of the reinforcements 52 shown with reference 58. From a second to a first longitudinal / circular position of the chamber is the rolling out of the production shape of said sealing type as follows: both angles ω and ξ at a second longitudinal / circular position of the chamber become angle ψ, as shown in Fig. 4A at a first longitudinal / circular position of the chamber. In order to avoid arizing of cracks, holes 55 have been positioned at the end of two adjacently placed legs 56 and 57 (schematically drawn) of the circle segments 53 and 59.

Fig. 5A shows an enlarged detail of Fig. 1, where the inner wall 4 of the chamber 2 at a 1^{st} position of said chamber is sealingly communicating with the sealing 7 of the piston 1 by the separate part's O-ring 6. Said sealing is comprising of a reinforcement 9, and at least one layer of impervious elastically deformable materal 8. Said reinforcement is an addition to the reinforcements in the folds 18 between sections 19, 20 (see Fig. 3C). The O-ring 6 is vulcanizd to said sealing sections 8 - see the hatch differences. The O-ring 6 is supported by a coil spring 34 (schematically drawn). Said coil spring has a part 44 of the circleround cross-section, which can turn over an angle ζ in order to support the expansion of the O-ring 6 - this is done here by torsioning a coil of said coilspring - other support methods are possible too. The member 12 is comprising a portion 37 which is formed with a shaped holder 38 which is having a similar circle round shape as the outside shape of said coil spring, optimizing the support of the coilspring 34. The centre 17 of said O-ring, and the centre 48 of the coil spring 34.

Fig. 5B shows an enlarged detail of Fig. 1, where the piston 1' is at a 2^{nd} longitudinal / circular position of the chamber of the chamber 2'. Fig. 5B has the same scale as Fig. 5A. The piston rod 5, and the internal wall 4' of the chamber 2'. The O-ring 6' is engaging sealingly said internal wall 4'. The member 12' is positioned almost parallel to the piston rod 5. The portion 37 has been retracted (36') from the end of the member 12', so as to enable the sealing 7 is not stretching the length `f', which otherwise would shorten the life time of the piston 1'. The length `f' is shown being the length between said centre 48 and the centre 48' of the retracted portion 37'. The stop 39, which is mounted on the piston rod 5, is stopping the synchrone movement of holder 38 with the movement of member 12', and ends with the position of holder 38', when the piston is moving to a second longitudinal / circular position of the chamber. The holder 38,38' may have a spring 40 (not shown), which reverses the repositioning of holder 38' to 38, when the piston is moving to a 1^{st} longitudinal / circular position of the chamber.

Fig. 5C shows schematically the suspension of the O-ring 6 to a member 12. The hinge 63 is at one end 62 embedded in the O-ring 6 (preferably in the centre 17), while at the other end rotatably mounted in turning point 64. At the opposite end of said turning point 64 is a hinge 65 mounted. The last mentioned hinge 65 is mounted on the portion 37 of the member 12. Preferably is the hinge 63 rotatable over angle γ in a plane perpendicular the axle 13 of a member 12, around an internal axle 68 of said turning point 64, and said axle 68 is positioned in the centre point 48 of the coil spring 34'. The hinge 63 may be updivided in 2 parts, which can slide in each other (not shown), so as to adapt dimensions.

Fig. 6 shows an alternative solution for the coil spring 34,34'. The flat spring 66 is mounted by a bold and nut connection on a member 67, which at the other side is vulcanized on the O-ring 6,6'. Said flat spring 66 is mounted at its other side on the piston rod 5 (not shown).

Fig. 7 shows the piston 1 of Fig. 1, now further comprising a sealing surface 60,60' embedded in the O-ring 6,6' and vulcanized onto the piston rod 5. Said sealing surface 60' is folded when the piston 1' is at a 2^{nd} longitudinal / circular position of the chamber. The venting hole 61, which is positioned in the suspension 68 of the members 12, and is connecting the inner volume 69,69' of said piston and said sealing surface 60,60', with the outer part 70 of the chamber 2, and the atmosphere 71, through the venting hole 72 in the cab 73.

Fig.8A shows schematically a part of a plane - type sealing. The fold 74 connects two planes 75 and 76, which are comprising reinforcement strings 77 and 78, both parallel to said fold 74 (alike as earlier shown in Fig. 3C). Said fold has a reinforcent 79. Additionally reinforcement strings 80 and 81, which are connected to said reinforcement strings 77, 78 and 79, and shown perpendicular to said reinforcement strings 77, 78 and 79. This 90° angle may be different (not shown). The centre axis 82 of the fold 74.

Fig. 8B shows schematically a part of a curved - type sealing. The vertically shown reinforcements 83, 84 and 85 are positioned alike shown in Fig.4B. The reinforcement strings 86, 87, 88 and 89 are shown laying a certain constant distance from each other, and are connected to said reinforcement strings 83 - 85 (incl.), and shown perpendicular to said reinforcement strings. This 90° angle may be different (not shown). Said strings 86 - 89 (incl.) are positioned a certain distance from the other surface 90 of the sealing 91.

## Claims

1. A piston-chamber combination comprising a chamber (1) which is bounded by an inner chamber wall (4), and comprising a piston (1) in said chamber (2) to be engagingly movable relative to said chamber wall (4) at least between a first position and a second position of the chamber (2),
said chamber (2) having cross-sections of different cross-sectional areas and differing circumferential lengths at the first and second longitudinal positions, and at least substantially continuously different cross-sectional areas and circumferential lengths at intermediate longitudinal positions between the first and second longitudinal positions, the cross-sectional area and circumferential length at said second longitudinal position being smaller than the cross-sectional area and circumferential length at said first longitudinal position,
said piston (1) is comprising an member (12) for suspension of the sealing (8,9), said member (12) is rotatable, and said sealing (8,9) is comprising a separate part (6,6') engaging the wall (4) of said chamber (2) and a sealing (8,9) made of elastically deformable impervious material, and mounted on the piston rod (5),
**characterized by** the fact that
the piston (1) is produced to have a production-size of said separate part (6') and said sealing (8,9) in the stress-free and undeformed state thereof in which the circumferential length of the piston (1) is approximately equivalent to the circumferential length of said chamber wall (4) at said second longitudinal position, the piston (1) being expandable from its production size in a direction transversally with respect to the longitudinal / circular direction of the chamber (2) thereby providing for an expansion of sealing (7) of the piston (1) from the production size thereof during the relative movements of the piston from said second longitudinal position to said first longitudinal / circular position,
one end, closest to a second longitudinal / circular position of the chamber, the sealing (7,7') is embedded in a separate part (6,6'), said sealing (8,9) of the piston (1) is comprising sealing sections (19,20; 51,51') in a direction along the piston rod (5), said sealing (7) is updivided in said sections over the circumference of said sealing (7), and, the angle (ε;ψ) in-between two adjacent sealing sections is much less than 180°,
one other end, closest to a first longitudinal / circular position of the chamber, said sealing (7) is updivided in said sections (19,20;51,51') over the circumference of said sealing (7), and, the angle (δ;ξ) in-between two adjacent sealing sections is bigger than said angle (ε;ψ).

2. A piston-chamber combination according to claim 1, wherein said sealing sections are plane sections, having folds in-between said sections, said sections and said folds are comprising reinforcements, said reinforcements are communicating with each other.

3. A piston-chamber combination according to claim 1, wherein said sealing sections are curved sections, and are comprising in turning centres reinforcements which are positioned in a direction along the piston rod, said sections are comprising reinforcements, said reinforcements are communicating with each other.

4. A piston-chamber combination according to claim 2, wherein said angles are between two adjacently positioned section planes.

5. A piston-chamber combination according to claim 3, wherein said angles are between two adjacently positioned reinforcement ends of turning centres in a transversal cross-section.

6. A piston-chamber combination according to claim 1, further comprising turning points for the sealing and for a member (12), wherein said turning points of are closely positioned to each other.

7. A piston-chamber combination according to claim 1, further comprising a coil spring for suspending said separate part, said coil spring is comprising a part (44) which can turn over an angle ζ.

8. A piston-chamber combination according to claim 1, of which member (12) is further comprising a shaped holder 38, wherein said holder has a similar circle round shape as the outside shape of said coil spring (34,34').

9. A piston-chamber combination according to claims 1 or 8, wherein said shaped holder is part of a portion (37) of said member (12), wherein said portion is retractable, by a stop (39) which is mounted on the piston rod (5).

10. A piston-chamber combination according to claim 1, wherein the member 12 is having an angle α, preferably approximately 60°, with the centre axis 3 of the piston rod 5.

11. A piston-chamber combination according to claim 1, wherein the turning point, spot 10 of the sealing 7, is positioned very nearly the centre 11 of the axle 13 of the member 12.

12. A pump for pumping a fluid, the pump comprising:
- a combination according to any of the preceeding claims,
- means for engaging the piston means from a position outside the chamber,
- a fluid entrance connected to the chamber and comprising a valve means, and
- a fluid exit connected to the chamber.
- said separate part (6,6') is sealingly engaging the wall (4) of said chamber (2), at least from a first to a second longitudinal / circular position of the chamber.

13. A pump according to claim 12 wherein the engaging means have an outer position where the piston means is at the first longitudinal / circular position of the chamber, and an inner position where the piston means is at the second longitudinal / circular position of the chamber.

14. A pump according to claim 12 wherein the engaging means have an outer position where the piston means is at the second longitudinal / circular position of the chamber, and an inner position where the piston means is at the first longitudinal / circular position of the chamber.

15. A shock absorber comprising:
- a combination according to any of claims 1 to 11,
- means for engaging the piston means from a position outside the chamber, wherein the engaging means have an outer position where the piston means is at the first longitudinal position of the chamber, and an inner position where the piston means is at the second longitudinal position,
- said separate part (6,6') is sealingly engaging the wall (4) of said chamber (2), at least from a first and a second longitudinal / circular position of the chamber.

16. A shock absorber according to claim 15, further comprising a fluid entrance connected to the chamber and comprising a valve means.

17. A shock absorber according to claim 13 or 14 further comprising a fluid exit connected to the chamber and comprising a valve means.

18. A shock absorber according to any of claims 15 to 17 wherein the chamber and the piston means form an at least substantially sealed cavity comprising a fluid, the fluid being compressed when the piston means moves from the first to the second longitudinal / circular position of the chamber.

19. A shock absorber according to any of claims 15 to 17 further comprising means for biasing the piston means toward the first longitudinal / circular position of the chamber.

20. An actuator comprising:
- a combination according to any of claims 1 to 11,
- means for engaging the piston means from a position outside the chamber,
- means for introducing fluid into the chamber in order to displace the piston means between the first and the second longitudinal / circular positions of the chamber,
- said separate part (6,6') is sealingly engaging the wall (4) of said chamber (2), from a second to a first longitudinal / circular poition of the chamber or from a first to a second longitudinal / circular position of the chamber.

21. An actuator according to claim 20, further comprising a fluid entrance connected to the chamber and comprising a valve means.

22. An actuator according to claim 20 or 21, further comprising a fluid exit connected to the chamber and comprising a valve means.

23. An actuator according to any of claims 20 to 22 further comprising means for biasing the piston means toward the first or second longitudinal l circular position of the chamber.

24. An actuator according to any of claims 20 to 23, wherein the introducing means comprise means for introducing pressurised fluid into the chamber.

25. An actuator according to any of claims 20 to 23 wherein the introducing means are adapted to introduce a combustible fluid, such as gasoline or diesel, into the chamber, and wherein the actuator further comprises means for combusting the combustible fluid.

26. An actuator according to any of claims 20 to 23 further comprising a crank adapted to translate the translation of the piston means into a rotation of the crank.
